# EUROPEAN PATENT SPECIFICATION

(11) **EP 4 607 358 B1**
(45) Date of publication and mention of the grant of the patent: **18.11.2026**
(21) Application number: 25158950.3
(22) Date of filing: 19.02.2025
(51) Int. Cl.: G06F 11/30, G06F 1/3203, G06F 11/34, G06N 20/00

(54) **A METHOD FOR MEASURING AND PREDICTING THE ENERGY CONSUMPTION OF A COMPUTER PROCESS**
VERFAHREN ZUR MESSUNG UND VORHERSAGE DES ENERGIEVERBRAUCHS EINES COMPUTERPROZESSES
PROCÉDÉ DE MESURE ET DE PRÉDICTION DE LA CONSOMMATION D'ÉNERGIE D'UN PROCESSUS INFORMATIQUE

(30) Priority: 20.02.2024 IL 31098924
(43) Date of publication of application: 27.08.2025
(73) Proprietor: Deutsche Telekom AG, 53113 Bonn (DE)
(72) Inventor: ANIDGAR, Sapir, 7775117 Ashdod (IL); BRUDNI, Sagi, 3826547 Hedera (IL); MIMRAN, David, 6215505 Tel Aviv (IL); SHABTAI, Asaf, 7684200 Hulda (IL); ELOVICI, Yuval, 7986400 Arugot (IL); BRODT, Oleg, 8471621 Beer Sheva (IL); LEHMANN, Heiko, 12587 Berlin (DE)
(74) Representative: Graf von Stosch Patentanwaltsgesellschaft mbH

(56) References cited:
- ROMANSKY STEPHEN ET AL: "Deep Green: Modelling Time-Series of Software Energy Consumption", 2017 IEEE INTERNATIONAL CONFERENCE ON SOFTWARE MAINTENANCE AND EVOLUTION (ICSME), IEEE, 17 September 2017 (2017-09-17), pages 273 - 283, XP033248484, DOI: 10.1109/ICSME.2017.79
- SINGH VIVEK KUMAR ET AL: "Estimating the Energy Consumption of Executing Software Processes", 2013 IEEE INTERNATIONAL CONFERENCE ON GREEN COMPUTING AND COMMUNICATIONS AND IEEE INTERNET OF THINGS AND IEEE CYBER, PHYSICAL AND SOCIAL COMPUTING, IEEE, 20 August 2013 (2013-08-20), pages 94 - 101, XP032530536, DOI: 10.1109/GREENCOM-ITHINGS-CPSCOM.2013.40

## Description

### Field of invention

The present invention relates to the field of energy efficiency of computerized processes. More particularly, the invention is directed to a method and system (framework) for accurately measuring and predicting the energy consumption of computer processes.

### Background of invention

Information and Communications Technology (ICT - is the infrastructure and components that enable modern computing. IC technologies, tools and systems improve the way humans create, process and share data or information with each other) is fundamental to the technical infrastructure of modern life. ICT allows to share information, make video calls, send messages across the globe, pay online, consume software, and more. Most of the critical infrastructures (such as hospitals, energy generation and distribution facilities, water supply, and communications, along with any computer-enabled applications) relies on ICT.

However, ICT consumes a significant amount of energy that entails high cost to society. ICT substantially loads the energy supply facilities and has become a contributing factor in climate change. With the increasing demand for computational power in the digital era of, energy consumption is expected to rise, in order to meet the insatiable energy requirements of computation.

*"*Deep Green: Modelling Time-Series of Software Energy Consumption" (ROMANSKY, Stephen et al., 2017 IEEE International Conference on Software Maintenance and Evolution (ICSME), IEEE, 17 September 2017, pages 273-283, DOI: 10.1109/ICSME.2017.79) discloses a method in which energy consumption is modeled using time-series measurements collected during test runs of Android applications, where the system executes a series of simple to measure and construct models that use software performance measurements to predict instantaneous energy consumption. Multiple applications are executed under simulated use cases to obtain energy and resource data, which is then used to train machine learning models to predict energy consumption from the collected time-series resource usage. However, this reference treats the system as a whole and focuses on modeling aggregate energy usage patterns without explicitly distinguishing background consumption from process-specific consumption.

*"*Estimating the Energy Consumption of Executing Software Processes" (SINGH, Vivek Kumar et al., 2013 IEEE International Conference on Green Computing and Communications and IEEE Internet of Things and IEEE Cyber, Physical and Social Computing, IEEE, 20 August 2013, pages 94-101, DOI: 10.1109/GREENCOM-ITHINGS-CPSCOM.2013.40) discloses a method for estimating the energy consumption of executing software processes using aggregate system-level metrics by collecting data at the system level during the execution of a web application and uses these measurements to train machine learning models for energy prediction. These aggregate system-level metrics include OS-level overall CPU utilization (e.g., user, system, idle percentages), memory activity, disk I/O (e.g., sectors read/written), and network throughput (e.g., bytes transmitted/received), along with external watt-meter measurements of total power consumption. However, the measurement process involves tracking overall CPU usage, memory activity, I/O operations, and power consumption, but the system relies on modeling the total energy consumed during execution and correlating it with aggregate resource metrics, without differentiating between background system consumption and process-specific activity.

It is therefore an object of the present invention to provide a framework for accurately measuring and predicting the energy consumption of computer processes, that is applicable across various computing platforms.

It is another object of the present invention to provide a framework for accurately measuring and predicting the energy consumption of computer processes, that is applicable to various computing hardware and software.

It is a further object of the present invention to provide a framework for accurately measuring and predicting the energy consumption of computer processes, that allows separating the energy consumed by a particular process from the energy consumed by other processes, running on the same device.

It is still another object of the present invention to provide a framework for accurately measuring and predicting the energy consumption of computer processes, which does not require any external hardware to measure the energy consumption of a running process.

It is yet another object of the present invention to provide a generic framework for accurately measuring and predicting the energy consumption of computer processes, which is process and platform agnostic, and can be easily integrated into any Windows or Linux-based system.

It is still another object of the present invention to provide a framework for accurately measuring and predicting the energy consumption of computer processes, which is highly robust to changes in the environment, and minimizes the time and effort needed when analyzing the energy consumption of several processes.

Other objects and advantages of the invention will become apparent as the description proceeds.

### Summary of the Invention

A method for measuring and predicting the energy consumption of computer processes running on a computerized device having at least one processor and associated memory, comprising:
a) for each computer process measuring, by an operation software stored in the computerized device, the resource utilization and the corresponding energy consumption of the resource utilization during the each computer process, for a wide variety of resource utilization combinations;
b) creating a labeled dataset, which consists of the measurements obtained in the preceding step;
c) building a machine learning prediction model for predicting the energy consumption of any resource utilization combination, and training the prediction model using data from the labeled dataset;
d) monitoring the resource utilization of a specific process of interest; and
e) predicting the energy consumption of the specific process of interest in a predetermined context, by applying the prediction model to the specific process of interest,

the energy consumption of each computer process is isolated by subtracting the energy consumption of the computerized device in an idle state from the energy consumption measured during execution of the computer process under a predefined resource load profile,
wherein the idle state is defined as the state of the computerized device during a predefined time window in which the computer process is not executing and the device is not subject to any predefined resource load profile, and wherein the labeled dataset includes one or more hardware specification features of the computerized device.

The measurement of resource utilization may be in the form of a matrix of measurements that reflects the energy consumption of the computerized device as a function of resource utilization by loading different resources with different load targets and measuring the corresponding energy consumption.

The computerized device may be a battery-powered laptop computer or a grid-powered computer.

For battery-powered devices, the energy consumption of the entire computer system may be measured, based on the energy depleted from the device's battery, using a program that queries the status of the battery.

For non-battery-powered devices, the energy consumption of the entire computer device is measured by an external device which measures the voltage and current consumed by the computerized device when the measurement is performed.

The method may further comprise the steps of:
i) constructing a current-voltage graph of the power consumed by the computerized device under test;
ii) integrating the current-voltage graph to obtain the power consumption during the measurement; and
iii) calculating the energy consumed by the device under test by multiplying the integration result by the measurement duration.

The resources utilized by a process may be measured during a specific time window, separately from the energy consumed by other processes running on the same device, by:
1) measuring the energy consumption of a computerized device being an idle state;
2) loading the computerized device with a specific resource load profile;
3) measuring the corresponding energy consumption; and
4) calculating the process-related consumption by deducting the total energy consumption in an idle state from subsequent process measurements.

The labeled dataset may be generated, using a dedicated program that executes a process and controls the resource usage of the process, while measuring the energy usage of the process.

The machine learning prediction model for predicting the energy consumption for any load profile may be trained by measuring the energy consumption of a variety of resource load profiles, running on various devices individually.

The prediction model may be a regressor or a deep learning prediction model.

The energy consumption of a process of interest may be predicted by:
A) measuring the resource usage of the examined process and the resource usage of the entire computerized device, while the process is running;
B) using the collected data and the hardware specifications of the computerized device running the process, as an input to the machine learning prediction model; and
C) running the prediction model to obtain a prediction of the energy consumption of the process of interest.

The method may further comprise the step of calculating the total energy consumption of a specific process across an organizational fleet of computerized devices, by multiplying each prediction by the number of devices with the same hardware specification and summing the results.

The energy consumption of n processes may be measured using a single measurement by:
α) executing all n processes;
β) entering the results into the prediction model; and
γ) receiving the energy consumption of each process.

### Brief Description of the Drawings

The above and other characteristics and advantages of the invention will be better understood through the following illustrative and non-limitative detailed description of preferred embodiments thereof, with reference to the appended drawings, wherein:

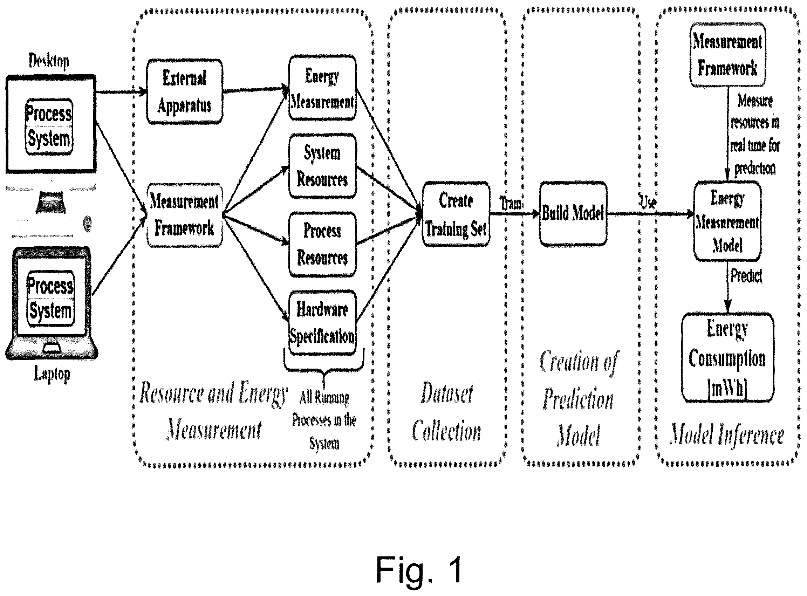

- Fig. 1 illustrates the architecture and steps of the proposed framework, according to an embodiment of the invention.

### Detailed Description of the invention

The present invention provides a power consumption measurement method for providing a comprehensive, process-agnostic framework, capable of measuring, analyzing, and predicting the energy consumption of any computer-related process running on a computerized device with at least one processor and associated memory. For each computer process an operation software stored in the computerized device measures the resource utilization and the corresponding energy consumption of said resource utilization during said each computer process, for a wide variety of resource usage utilization combinations.

The proposed method is capable of measuring and predicting the energy consumed by any process that runs on a computer system, based on its resource consumption. The proposed measurement method allows separating the energy consumed by a particular process from the energy consumed by other processes running on the same device.

The proposed measurement method assumes no prior knowledge of the inner-workings of the process, thereby treating the examined process as a "black-box". The method of the present invention uses a program that tracks the hardware usage in a pre-defined time window (e.g., number of disk reads and writes and CPU and RAM usage), and associates the resource consumption to a specific process.

The present invention also uses Machine Learning (ML) models for energy prediction and a dataset-driven approach that affects resource utilization and hardware specifications.

The proposed consumption measurement and prediction framework performs several steps. At the first step (Energy/resource measurement), the resource utilization and its corresponding energy consumption is measured for a wide variety of resource usage combinations (e.g., number of disk read and write operations, CPU and RAM usage) and their corresponding energy consumption.

At the next step (dataset creation), a labeled dataset (a collection of input data samples, where each sample is associated with one or more output labels that serve as the ground truth for the problem at hand) is created, which consists of the measurements obtained in the preceding step.

At the next step (prediction model creation), the dataset is used to build a machine learning prediction model that predicts the energy consumption of any resource utilization combination.

At the next step, the resource utilization of a specific process of interest is monitored and the prediction model that has been built in the preceding step is applied to predict the energy consumption of this specific process in a specific context.

A further step refers to the isolation of energy consumption of each computer process by subtracting the energy consumption of the computerized device in an idle state from the energy consumption measured during execution of the computer process under a predefined resource load profile. Therein, the idle state is defined as the state of the computerized device during a predefined time window in which the computer process is not executing and the device is not subject to any predefined resource load profile. The labeled dataset includes one or more hardware specification features of the computerized device.

Fig. 1 illustrates the architecture and steps of the proposed framework, according to an embodiment of the invention.

At the first step illustrated in Fig. 1, a matrix of measurements is created. The matrix reflects the energy consumption of the computer system as a function of resource utilization. To accomplish this, different resources (e.g., CPU, I/O) were loaded with different load targets (e.g., CPU=10% and I/O=20 Mbps) and the corresponding energy consumption was measured. These measurements were performed on both laptop and desktop platforms. Due to physical differences in the energy supply of grid powered devices (e.g., desktop computers) and battery powered devices (e.g., laptops), the energy measurement for laptop computerized systems is different from that performed for desktop computerized systems.

For battery-powered devices, the energy consumption of the entire computer system was measured, based on the energy depleted from the device's battery by using a program that queries the battery status.

In order to measure the total energy consumed by stationary devices (i.e., grid-powered devices), a standard external device has been used, which measures the voltage and current passing to the desktop computer system when the measurement is obtained. The samples were taken frequently, and a current-voltage graph was constructed. First, the current-voltage graph has been integrated to obtain the power consumption during the measurement. Then, the result is multiplied by the measurement duration to receive the energy consumed by the device under test.

The measurements setup included measurement software that has been developed, to measure the resource usage of every process that runs on the examined device on a granular-level (the level of detail or precision of the data. For example, data that has a high level of granularity would have a large number of individual pieces of information, such as individual records or measurements). The functionality of reading the battery capacity for battery powered devices was added using Windows Management Instrumentation (WMI) library for Windows systems (WMI is a set of specifications from Microsoft for consolidating the management of devices and applications in a network from Windows computing systems. WMI provides users with information about the status of local or remote computer systems) and the upower command (a simple command to check the battery status of a laptop) for Linux systems. By using the battery capacity readings, it is possible to assess the energy consumption of laptops. In desktop devices, the program has been used to read the internal resource utilization, while measuring the energy consumption of the entire device under test using the external device, as described above.

### Measurements, dataset creation and machine learning model training

In order to perform measurements, the energy consumption of an idle system has been measured first. Then, the system was loaded with a specific resource load profile. Once loaded, the corresponding energy consumption (as well as a more granular measurement of the actual resource load) was measured. Then, the total energy consumption in an idle state has been deducted from subsequent process measurements, in order to obtain the process-related consumption. This way, the resources utilized by the process during a specific time window has been tracked to assess the energy consumed by a process, separately from the energy consumed by other processes running on the same device.

A dedicated program has been used (such as a "Heavy-Load" program, which writes a large test-file to the temp folder, allocates physical and virtual memory, performs complex calculations and draws patterns in its window, in order to stress a PC or server), which enables setting target load goals for various computer components. The dedicated program allows generating processes and controlling their resource utilization profile. For example, it is possible to set Central Processing Unit (CPU) load (usage) goal, a Random-Access Memory (RAM) load (usage) goal, an Input/Output (I/O) load (usage) goal, etc. Using this dedicated program, hundreds of different load combinations were generated. The measurements obtained in the previous step were saved in a dedicated labeled dataset, which was used to train a machine learning prediction model, capable of predicting the energy consumption for any load profile. In addition to the measurements, the dataset records include the resources used by a specific process, the resources used by the entire device when the measurement was obtained, and the hardware specification of the device that executed the process. The resources used by the process and the entire device included in the dataset are: the CPU usage, memory usage, number of disk I/O read operations, number of disk I/O write operations, number of bytes of disk I/O read operations, number of bytes of disk I/O write operations, and number of page faults, as well as the corresponding energy used by the process (which is calculated by subtracting the total energy consumption in an idle state from the energy consumed by the device when it runs the specified process).

The dataset is used to train a Machine Learning (ML) prediction model that can predict the energy consumption of a process, based on its resource consumption. In order to train the ML prediction model, the energy consumption of a variety of resource load profiles, running on various devices individually, were measured. The ML prediction model can be a classical machine learning prediction model such as a regressor (any variable in a regression model that is used to predict a response variable, such as random forest being a supervised learning algorithm and bagging technique that uses an ensemble learning method for regression in machine learning), as well as a deep learning prediction model (e.g., a neural network - an artificial neural network is an interconnected group of nodes, inspired by a simplification of neurons in a brain. Each circular node represents an artificial neuron and an arrow represents a connection from the output of one artificial neuron to the input of another).

Once a prediction model is trained, it can be used to infer the energy consumption of an examined process.

The proposed measurement framework is adapted to predict the energy consumption of a process of interest. At the first step, the user uses the proposed measurement framework to measure both the resource usage of the examined process, as well as the resource usage of the entire system, while the process is running. At the next step, the user uses the collected data and the hardware specifications of the device running the process, as an input to the framework's machine learning prediction model. At the next step, the user runs the prediction model to obtain a prediction of the energy consumption of the process.

In order to obtain the total energy consumption of a specific process across an organizational fleet of computerized devices, each prediction is multiplied by the number of devices with the same hardware specification. Then, the results are summed, as shown in Eq. 1. [Eq. 1] ${EnergyConsumption}_{P} = {\sum }_{c ∈ devicesInOrganization} {E}_{p , c} {n}_{c}$

Eq. 1 presents the calculations needed to calculate the amount of energy consumed by the organization when running the process p, where E_{p,c} is the prediction model's energy prediction for process p when it is run on the hardware of computer c, and n_{c} is the number of devices in the organization that have the same hardware specification as computer c.

According to Eq. 2, [Eq. 2] ${EnergyConsumption}_{D} = {\sum }_{p ∈ processesInD} {E}_{p}$ an organization can estimate the energy spent in a specific domain (such as cybersecurity) by repeating the computations described above for each process in the domain and summing the results. Eₚ denotes the energy consumed by a process p that belongs to domain D.

The prediction model can also be used to calculate the total energy consumption of the entire organization, using Eq. 3. [Eq. 3] ${EnergyConsumption}_{O} = {\sum }_{d ∈ domainsInO} {E}_{d}$

E_{d} in Eq. 3 denotes the energy consumed by a domain d which is one of the O's domains (O is a typical organization).

In this case, the process of calculating the energy consumption of a specific domain is repeated for each domain in the organization.

The proposed framework has several advantages:
No external hardware is needed to measure the energy consumption of a running process, since the energy consumption is predicted by the prediction model, based on resource utilization. The resource utilization is measured using the proposed measurement software, while considering the hardware specification of the device that executes the examined process. The proposed framework is also process and platform agnostic, and therefore, is generic. Hence, the proposed framework can be easily integrated into any Windows or Linux-based system. The measurement framework is also process-agnostic (the process for which the energy consumption is measured is treated as a "black-box", meaning that the parameters and actions of the process are unknown when the energy is measured) and therefore, it is also robust, extendable and adaptable to different environments and platforms (e.g., hardware, Operating System (OS)).

In addition, the proposed framework can receive inputs regarding multiple processes running on different platforms or running simultaneously on the same device. Then, based on the collected data, it can predict the energy consumption of each process individually. This feature makes the prediction model highly robust to changes in the environment, and it can minimize the time and effort needed when analyzing the energy consumption of several processes.

In order to measure the energy consumption of n processes individually, there is usually a need to first measure the energy consumed by the computer when executing each process individually and then compare the results to the total energy consumption in an idle state, thereby required obtaining n + 1 measurements. However, the proposed prediction model can estimate the energy consumption of all n processes by performing a single measurement of their resource consumption, altogether.

By using the proposed measurement framework, an application designer can predict the energy consumption of the application before implementation, based on the resources to be utilized by the application. An organization can also define energy-efficient policies and predict the application-related energy costs for each relevant domain (such as cyber security and data management), thereby reducing the organization's energy use and costs.

The above examples and description have of course been provided only for the purpose of illustration. As will be appreciated by the skilled person, the invention can be carried out in a great variety of ways, employing more than one technique from those described above.

## Claims

1. A method for measuring and predicting the energy consumption of computer processes running on a computerized device having at least one processor and associated memory, comprising:
a) for each computer process measuring, by an operation software stored in said computerized device, resource utilization and corresponding energy consumption of said resource utilization during said each computer process, for a wide variety of resource utilization combinations;
b) creating a labeled dataset, which consists of the measurements obtained in the preceding step;
c) building a machine learning prediction model for predicting the energy consumption of any resource utilization combination, and training said prediction model using data from said labeled dataset;
d) monitoring the resource utilization of a specific process of interest; and
e) predicting the energy consumption of said specific process of interest in a predetermined context, by applying said prediction model to said specific process of interest,
***characterized in that:***
the energy consumption of each computer process is calculated by subtracting the
energy consumption of the computerized device in an idle state from the energy consumption measured during execution of the computer process under a predefined resource load profile,
wherein the idle state is defined as the state of the computerized device during a predefined time window in which the computer process is not executing and the device is not subject to any predefined resource load profile, and
wherein the labeled dataset includes one or more hardware specification features of the computerized device.

2. A method according to claim 1, wherein the measurement of resource utilization is in the form of a matrix of measurements that reflects the energy consumption of the computerized device as a function of resource utilization by loading different resources with different load targets and measuring the corresponding energy consumption.

3. A method according to claim 1, wherein the computerized device is a battery-powered laptop computer or a grid-powered computer.

4. A method according to claim 1, wherein for battery-powered devices, the energy consumption of the entire computer system is measured, based on the energy depleted from the device's battery, using a program that queries the status of said battery.

5. A method according to claim 1, wherein for non-battery-powered devices, the energy consumption of the entire computer device is measured by an external device which measures the voltage and current consumed by the computerized device when the measurement is performed.

6. A method according to claim 1, further comprising
i) constructing a current-voltage graph of the power consumed by the computerized device under test;
ii) integrating the current-voltage graph to obtain the power consumption during the measurement; and
iii) calculating the energy consumed by the device under test by multiplying the integration result by the measurement duration.

7. A method according to claim 1, wherein the resources utilized by a process are measured during a specific time window, separately from the energy consumed by other processes running on the same device, by:
1) measuring the energy consumption of a computerized device being an idle state;
2) loading the computerized device with a specific resource load profile;
3) measuring the corresponding energy consumption; and
4) calculating the process-related consumption by deducting the total energy consumption in an idle state from subsequent process measurements.

8. A method according to claim 1, wherein the labeled dataset is generated using a dedicated program that executes a process and controls the resource usage of said process, while measuring the energy usage of said process.

9. A method according to claim 1, wherein the machine learning prediction model for predicting the energy consumption for any load profile is trained by measuring the energy consumption of a variety of resource load profiles, running on various devices individually.

10. A method according to claim 1, wherein the prediction model is a regressor or a deep learning prediction model.

11. A method according to claim 9, wherein the energy consumption of a process of interest is predicted by:
A) measuring the resource usage of the examined process and the resource usage of the entire computerized device, while the process is running;
B) using the collected data and the hardware specifications of the computerized device running the process, as an input to the machine learning prediction model; and
C) running the prediction model to obtain a prediction of the energy consumption of said process of interest.

12. A method according to claim 1, further comprising calculating the total energy consumption of a specific process across an organizational fleet of computerized devices, by multiplying each prediction by the number of devices with the same hardware specification and summing the results.

13. A method according to claim 1, wherein the energy consumption of n processes is predicted using a single measurement by:
a) executing all n processes during a measurement time window;
b) measuring resource utilisation data for each of the n processes during said measurement time window;
c) entering the measured resource utilisation data into the machine-learning prediction model; and
d) outputting, by the machine-learning prediction model, a predicted energy consumption value for each of the n processes.

## Patentansprüche

1. Verfahren zum Messen und Vorhersagen des Energieverbrauchs von Computerprozessen, die auf einem computergestützten Gerät mit mindestens einem Prozessor und zugehörigem Speicher ausgeführt werden, umfassend:
a) für jeden Computerprozess die Messung der Ressourcennutzung und des entsprechenden Energieverbrauchs dieser Ressourcennutzung während des jeweiligen Computerprozesses durch eine in dem computergestützten Gerät gespeicherte Betriebssoftware für eine Vielzahl von Kombinationen von Ressourcennutzungen;
b) Erstellen eines beschrifteten Datensatzes, der aus den im vorhergehenden Schritt erhaltenen Messungen besteht;
c) Erstellen eines auf maschinellem Lernen basierenden Vorhersagemodells zur Vorhersage des Energieverbrauchs jeglicher Kombination von Ressourcennutzungen und Trainieren des Vorhersagemodells unter Verwendung von Daten aus dem beschrifteten Datensatz;
d) Überwachen der Ressourcennutzung eines bestimmten interessierenden Prozesses; und
e) Vorhersagen des Energieverbrauchs des spezifischen interessierenden Prozesses in einem vorgegebenen Kontext durch Anwenden des Vorhersagemodells auf den spezifischen interessierenden Prozess,
**dadurch gekennzeichnet, dass:**
der Energieverbrauch jedes Computerprozesses berechnet wird, indem der Energieverbrauch des computergestützten Geräts im Ruhezustand vom Energieverbrauch abgezogen wird, der während der Ausführung des Computerprozesses unter einem vordefinierten Ressourcenbelastungsprofil gemessen wurde,
wobei der Ruhezustand als der Zustand des computergestützten Geräts während eines vordefinierten Zeitfensters definiert ist, in dem der Computerprozess nicht ausgeführt wird und das Gerät keinem vordefinierten Ressourcenbelastungsprofil unterliegt, und
wobei der beschriftete Datensatz ein oder mehrere Merkmale der Hardware-Spezifikation des computergestützten Geräts enthält.

2. Verfahren nach Anspruch 1, wobei die Messung der Ressourcennutzung in Form einer Matrix von Messungen erfolgt, die den Energieverbrauch des computergestützten Geräts als Funktion der Ressourcennutzung widerspiegelt, indem verschiedene Ressourcen mit unterschiedlichen Belastungszielen belastet und der entsprechende Energieverbrauch gemessen wird.

3. Verfahren nach Anspruch 1, wobei das computergestützte Gerät ein batteriebetriebener Laptop oder ein netzbetriebener Computer ist.

4. Verfahren nach Anspruch 1, wobei bei batteriebetriebenen Geräten der Energieverbrauch des gesamten Computersystems auf der Grundlage der aus der Batterie des Geräts entnommenen Energie gemessen wird, wobei ein Programm verwendet wird, das den Status der genannten Batterie abfragt.

5. Verfahren nach Anspruch 1, wobei bei nicht batteriebetriebenen Geräten der Energieverbrauch des gesamten Computergeräts durch ein externes Gerät gemessen wird, das die Spannung und den Strom misst, die von dem computergestützten Gerät während der Durchführung der Messung verbraucht werden.

6. Verfahren nach Anspruch 1, das ferner umfasst
i) das Erstellen eines Strom-Spannungs-Diagramms der von dem in Prüfung befindlichen Computergerät verbrauchten Leistung;
ii) die Integration des Strom-Spannungs-Diagramms, um den Leistungsverbrauch während der Messung zu ermitteln; und
iii) das Berechnen der von dem in Prüfung befindlichen Gerät verbrauchten Energie durch Multiplikation des Integrationsergebnisses mit der Messdauer.

7. Verfahren nach Anspruch 1, wobei die von einem Prozess genutzten Ressourcen während eines bestimmten Zeitfensters getrennt von der von anderen auf demselben Gerät laufenden Prozessen verbrauchten Energie gemessen werden, indem:
1) der Energieverbrauch eines computergestützten Geräts im Ruhezustand gemessen wird;
2) das computergestützte Gerät mit einem bestimmten Ressourcenbelastungsprofil belastet wird;
3) der entsprechende Energieverbrauch gemessen wird; und
4) der prozessbezogene Verbrauch durch Abzug des Gesamtenergieverbrauchs im Ruhezustand anhand der nachfolgenden Prozessmessungen berechnet wird.

8. Verfahren nach Anspruch 1, wobei der beschriftete Datensatz unter Verwendung eines speziellen Programms erzeugt wird, das einen Prozess ausführt und die Ressourcennutzung dieses Prozesses steuert, während der Energieverbrauch dieses Prozesses gemessen wird.

9. Verfahren nach Anspruch 1, wobei das auf maschinellem Lernen basierende Vorhersagemodell zur Vorhersage des Energieverbrauchs für ein beliebiges Belastungsprofil durch Messungen des Energieverbrauchs einer Vielzahl von Ressourcenbelastungsprofilen, die einzeln auf verschiedenen Geräten ausgeführt werden, trainiert wird.

10. Verfahren nach Anspruch 1, wobei das Vorhersagemodell ein Regressor oder ein Deep-Learning-Vorhersagemodell ist.

11. Verfahren nach Anspruch 9, wobei der Energieverbrauch eines interessierenden Prozesses vorhergesagt wird durch:
A) das Messen der Ressourcennutzung des untersuchten Prozesses und der Ressourcennutzung des gesamten computergestützten Geräts, während der Prozess läuft;
B) die Verwendung der erfassten Daten und der Hardware-Spezifikationen des computergestützten Geräts, auf dem der Prozess ausgeführt wird, als Eingabe für das auf maschinellem Lernen basierende Vorhersagemodell; und
C) das Ausführen des Vorhersagemodells, um eine Vorhersage des Energieverbrauchs des interessierenden Prozesses zu erhalten.

12. Verfahren nach Anspruch 1, das ferner das Berechnen des Gesamtenergieverbrauchs eines bestimmten Prozesses über eine organisationsbezogene Flotte von computergestützten Geräten umfasst, indem jede Vorhersage mit der Anzahl der Geräte mit derselben Hardware-Spezifikation multipliziert und die Ergebnisse summiert werden.

13. Verfahren nach Anspruch 1, wobei der Energieverbrauch von n Prozessen anhand einer einzigen Messung ermittelt wird, indem:
a) alle n Prozesse während eines Messzeitfensters ausgeführt werden;
b) für jeden der n Prozesse während des Messzeitfensters Ressourcennutzungsdaten gemessen werden;
c) die gemessenen Ressourcennutzungsdaten in das auf maschinellem Lernen basierende Vorhersagemodell eingegeben werden; und
d) für jeden der n Prozesse ein Wert für den vorhergesagten Energieverbrauch durch das auf maschinellem Lernen basierende Vorhersagemodell ausgegeben wird.

## Revendications

1. Procédé pour mesurer et prédire la consommation d'énergie de processus informatiques exécutés sur un dispositif informatisé ayant au moins un processeur et une mémoire associée, comprenant :
a) pour chaque processus informatique, mesurer, par un logiciel d'exploitation stocké dans ledit dispositif informatisé, l'utilisation des ressources et la consommation d'énergie correspondante de ladite utilisation des ressources pendant ledit processus informatique, pour une grande variété de combinaisons d'utilisation des ressources ;
b) créer un ensemble de données étiquetées, constitué des mesures obtenues à l'étape précédente ;
c) construire un modèle de prédiction d'apprentissage automatique pour prédire la consommation d'énergie de n'importe quelle combinaison d'utilisation de ressources, et entraîner ledit modèle de prédiction en utilisant des données dudit ensemble de données étiquetées ;
d) surveiller l'utilisation des ressources d'un processus spécifique d'intérêt ; et
e) prédire la consommation d'énergie dudit processus spécifique d'intérêt dans un contexte prédéterminé, en appliquant ledit modèle de prédiction audit processus spécifique d'intérêt,
***caractérisé en ce que :***
la consommation d'énergie de chaque processus informatique est calculée en soustrayant la consommation d'énergie du dispositif informatisé en état inactif de la consommation d'énergie mesurée lors de l'exécution du processus informatique sous un profil de charge de ressources prédéfini,
dans lequel l'état inactif est défini comme l'état du dispositif informatisé pendant une fenêtre temporelle prédéfinie dans laquelle le processus informatique ne s'exécute pas et le dispositif n'est soumis à aucun profil de charge de ressources prédéfini, et
dans lequel l'ensemble de données étiquetées inclut une ou plusieurs caractéristiques de spécification matérielle du dispositif informatisé.

2. Procédé selon la revendication 1, dans lequel la mesure de l'utilisation des ressources prend la forme d'une matrice de mesures qui reflète la consommation d'énergie du dispositif informatisé en fonction de l'utilisation des ressources en chargeant différentes ressources avec des objectifs de charge différents et en mesurant la consommation d'énergie correspondante.

3. Procédé selon la revendication 1, dans lequel le dispositif informatisé est un ordinateur portable alimenté par batterie ou un ordinateur alimenté par secteur.

4. Procédé selon la revendication 1, dans lequel pour les dispositifs alimentés par batterie, la consommation d'énergie de l'ensemble du système informatique est mesurée, sur la base de l'énergie déchargée de la batterie du dispositif, en utilisant un programme qui interroge l'état de ladite batterie.

5. Procédé selon la revendication 1, dans lequel pour les dispositifs non alimentés par batterie, la consommation d'énergie de l'ensemble du dispositif informatique est mesurée par un dispositif externe qui mesure la tension et le courant consommés par le dispositif informatisé lorsque la mesure est effectuée.

6. Procédé selon la revendication 1, comprenant en outre :
i) construire un graphique courant-tension de la puissance consommée par le dispositif informatisé testé ;
ii) intégrer le graphique courant-tension pour obtenir la puissance consommée pendant la mesure ; et
iii) calculer l'énergie consommée par le dispositif testé en multipliant le résultat de l'intégration par la durée de la mesure.

7. Procédé selon la revendication 1, dans lequel les ressources utilisées par un processus sont mesurées pendant une fenêtre temporelle spécifique, séparément de l'énergie consommée par d'autres processus exécutés sur le même dispositif, en :
1) mesurant la consommation d'énergie d'un dispositif informatisé étant dans un état inactif ;
2) chargeant le dispositif informatisé avec un profil de charge de ressources spécifique ;
3) mesurant la consommation d'énergie correspondante ; et
4) calculant la consommation liée au processus en déduisant la consommation d'énergie totale dans un état inactif des mesures de processus ultérieures.

8. Procédé selon la revendication 1, dans lequel l'ensemble de données étiquetées est généré en utilisant un programme dédié qui exécute un processus et contrôle l'utilisation des ressources dudit processus, tout en mesurant la consommation d'énergie dudit processus.

9. Procédé selon la revendication 1, dans lequel le modèle de prédiction d'apprentissage automatique pour prédire la consommation d'énergie pour n'importe quel profil de charge est entraîné en mesurant la consommation d'énergie d'une variété de profils de charge de ressources, exécutés individuellement sur divers dispositifs.

10. Procédé selon la revendication 1, dans lequel le modèle de prédiction est un régresseur ou un modèle de prédiction d'apprentissage profond.

11. Procédé selon la revendication 9, dans lequel la consommation d'énergie d'un processus d'intérêt est prédite en :
A) mesurant l'utilisation des ressources du processus examiné et l'utilisation des ressources de l'ensemble du dispositif informatisé, pendant que le processus est en cours d'exécution ;
B) utilisant les données collectées et les spécifications matérielles du dispositif informatisé exécutant le processus, comme entrée dans le modèle de prédiction d'apprentissage automatique ; et
C) exécutant le modèle de prédiction pour obtenir une prédiction de la consommation d'énergie dudit processus d'intérêt.

12. Procédé selon la revendication 1, comprenant en outre le calcul de la consommation d'énergie totale d'un processus spécifique sur un parc organisationnel de dispositifs informatisés, en multipliant chaque prédiction par le nombre de dispositifs ayant la même spécification matérielle et en additionnant les résultats.

13. Procédé selon la revendication 1, dans lequel la consommation d'énergie de n processus est prédite en utilisant une seule mesure en :
a) exécutant l'ensemble des n processus pendant une fenêtre temporelle de mesure ;
b) mesurant les données d'utilisation des ressources pour chacun des n processus pendant ladite fenêtre temporelle de mesure ;
c) entrant les données d'utilisation de ressources mesurées dans le modèle de prédiction d'apprentissage automatique ; et
d) en émettant en sortie, au moyen du modèle de prédiction d'apprentissage automatique, une valeur de consommation d'énergie prévue pour chacun des n processus.
